Europäisches Patentamt

European Patent Office

Office européen des brevets

(19)

(11) **EP 0 571 608 B1**

(12) **EUROPEAN PATENT SPECIFICATION**

(45) Date of publication and mention
of the grant of the patent:
**28.05.1997 Bulletin 1997/22**

(21) Application number: **93900839.7**

(22) Date of filing: **03.12.1992**

(51) Int Cl.⁶: **G02B 15/16**

(86) International application number:
**PCT/US92/10445**

(87) International publication number:
**WO 93/12450 (24.06.1993 Gazette 1993/15)**

(54) **ZOOM LENS SYSTEM FOR USE IN A COMPACT CAMERA**

ZOOMOBJEKTIVSYSTEM FÜR KOMPAKTKAMERA

SYSTEME D'OBJECTIF ZOOM DESTINE A ETRE UTILISE DANS UN APPAREIL
PHOTOGRAPHIQUE COMPACT

(84) Designated Contracting States:
**DE FR GB**

(30) Priority: **13.12.1991 US 807521**
**13.12.1991 US 807541**

(43) Date of publication of application:
**01.12.1993 Bulletin 1993/48**

(73) Proprietor: **EASTMAN KODAK COMPANY
Rochester, New York 14650-2201 (US)**

(72) Inventor: **ESTELLE, Lee, Roy
Rochester, NY 14617 (US)**

(74) Representative: **Blickle, K. Werner, Dipl.-Ing. et al
KODAK AKTIENGESELLSCHAFT
Patentabteilung
70323 Stuttgart (DE)**

(56) References cited:
**US-A- 4 815 830          US-A- 4 818 081**

• **PATENT ABSTRACTS OF JAPAN vol. 10, no. 364
(P-524)(2421) 5 December 1986 & JP A 61159612**

**Description**

TECHNICAL FIELD

This invention relates to zoom lenses that while they may be used in general applications are particularly suitable for use in compact photographic devices.

BACKGROUND ART

Following the recent trend in the art to reduce camera bulk and size, there has been an increasing demand in shortening the camera length in the longitudinal direction.

In the prior art, cameras with so-called short zoom lenses are known to be comprised of a front negative optical unit and a rear positive optical unit. Despite the small size of these systems, these systems have a serious drawback; namely a long back focal length. Even though the lens system itself may be short, a camera embodying the lens is inevitably necessarily bulky because of this long back focal length. In order to overcome this problem, improved zoom lenses have been proposed.

These improved zoom lenses are comprised of two optical units. In order from the object side, these zoom lenses include an optical unit of positive power and an optical unit of negative power. However, the designs of this type typically have a large number of lens elements. This makes it difficult to construct a compact zoom lens. U.S. Patent 4,815,830 teaches that a zoom lens of this type may have a relatively small number of elements if the rear, negative optical unit consists of a negative meniscus lens element.

U.S. Patent 4,936,661 issued to Ellis I. Betensky et al. on June 26, 1990 describes a zoom lens with a short back focal length and having, from front to rear, a positive optical unit and a negative optical unit. The positive optical unit consists of a negative front subunit and a positive rear subunit. The preamble of claims 1 and 7 corresponds to US-A-4,936,661.

U.S. Patents 4,836,660 and U.S. 4,720,179, issued June 6, 1989 and January 19, 1988, respectively, to Ito, show relatively complex zoom lenses also having a moving rear negative lens group. A front positive group is composed of a weak front negative optical unit which in turn is made up of several strong single element lens components.

U.S. Patent 4,854,683, to Ozawa, issued August 8, 1989 has a fixed positive component between a rear negative lens group and the image plane in a construction otherwise somewhat similar to the Ito lenses.

Other similar zoom lenses are shown in U.S. Patent Nos. 4,953,957, to Kobayashi, issued September 4, 1990; 4,889,416, to Yamada, issued December 26, 1989; 4,993,814, to Hata, issued February 19, 1991; 4,787,718, to Cho, issued November 29, 1988; 4,830,476 to Aoki, issued May 16, 1989; and 4,818,081 to Ito, issued April 4, 1989. These lenses are complex, have several correcting elements and as a consequence are limited in both aperture and focal length range.

DISCLOSURE OF THE INVENTION

It is an object of the present invention to provide a lens system which has a small number of lens elements and which is relatively simple while retaining a small size for the lens itself and for the camera.

Most of the above-described lenses include a positive second subunit which moves during zooming, which positive unit contains the primary lens aperture stop. This results in an effective aperture at this positive unit which becomes proportionally larger as the focal length is increased unless the relative aperture of the entire lens is allowed to decrease substantially with the increase in focal length. If the focal length range is extended beyond 2 to 1, the problem is more severe, and correcting the aberrations for the larger aperture is not generally consistent with the desirability of compactness, low cost and general simplicity of design.

According to the invention, these problems are solved by a zoom lens as defined in Claim 1 or claim 7.

According to preferred embodiments, the ratio $|K_{1A} / K_w|$ is equal to or greater than 0.4. According to some embodiments it is slightly negative and some it is slightly positive.

For lowest cost and greatest simplicity, the preferred embodiment of the first subunit is a single element. In some of the embodiments, this element has at least one aspheric surface. The weak front optical subunit serves as an aberration corrector, but because of the weak power the aperture size of the second subunit can be small. The front element is typically negative. The negative front element is used to control the back focus of the zoom lens in the wide angle position. The aperture stop is positioned in front of the second subunit, e.g., close to the first optical unit. The aberration correcting ability of a separated first subunit is retained. Placing the aperture stop forward of the second subunit rather than behind it allows the second subunit to participate more fully in the correction of all aberations and assures a small front window. At the same time, the aperture stop can be placed close to the first optical subunit which minimizes the front unit's lens elements diameters and reduces or eliminates variation of entrance pupil position during zooming.

With this invention, well corrected zoom lenses are obtained with apertures varying from f/8 to f/11 across a zoom range of about 2 to 1 using as few as three or four lens elements.

BRIEF DESCRIPTION OF THE DRAWINGS

In the detailed description of the preferred embodiment of the invention presented below, reference is made to the accompanying drawings, in which:

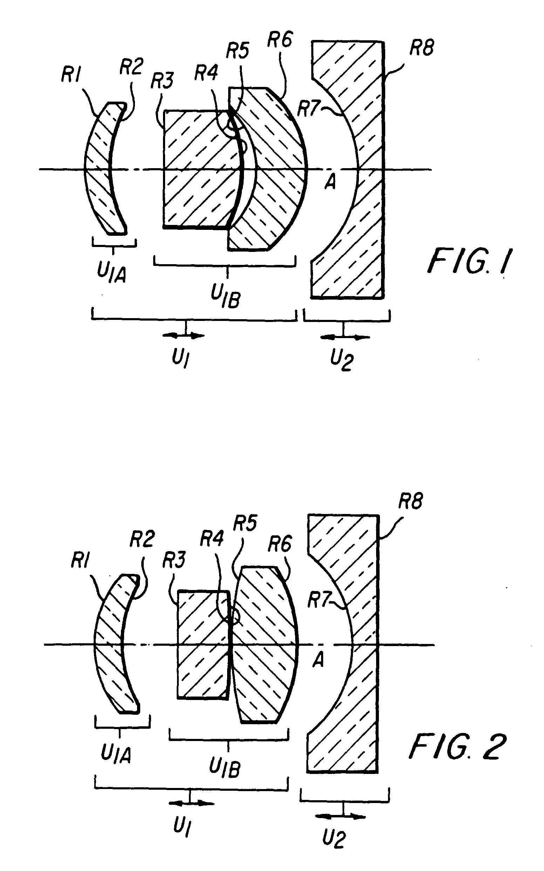

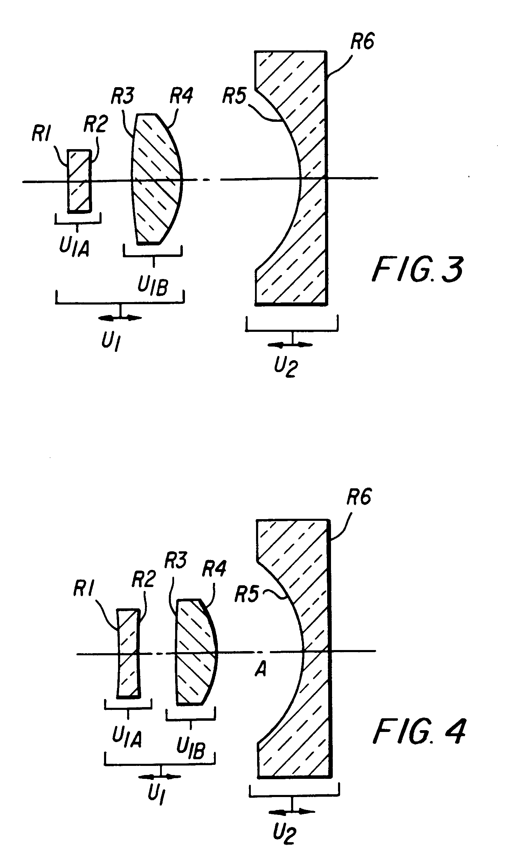

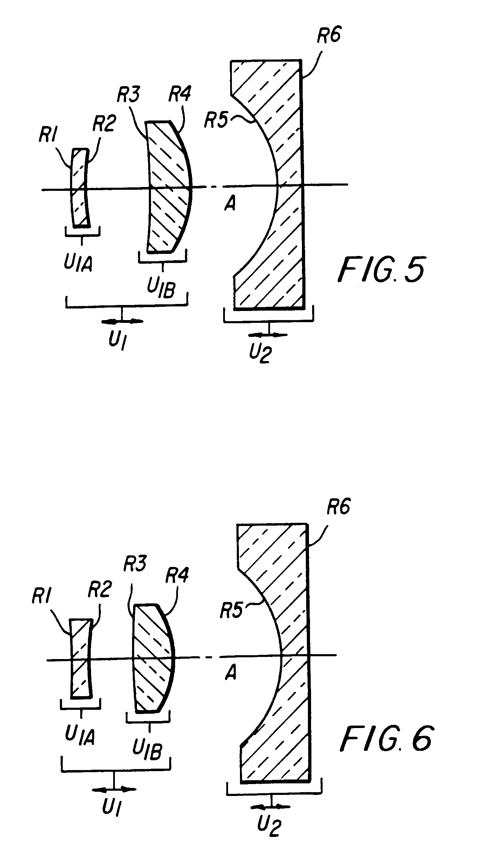

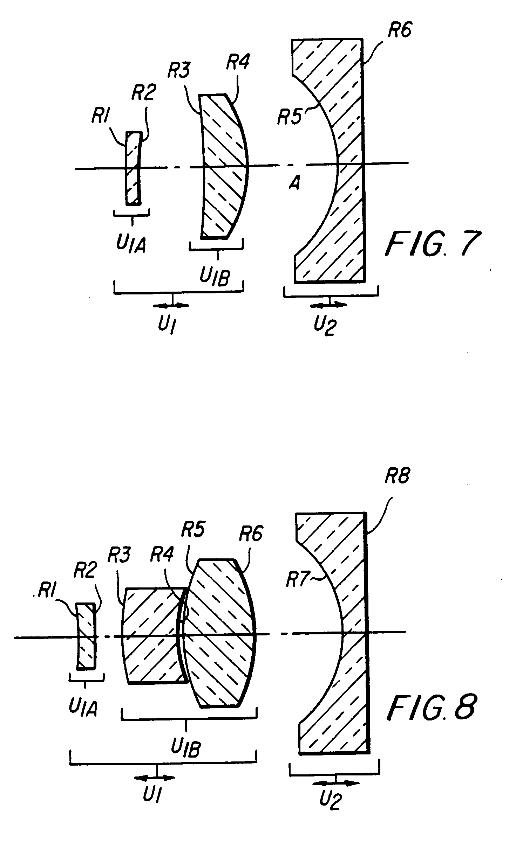

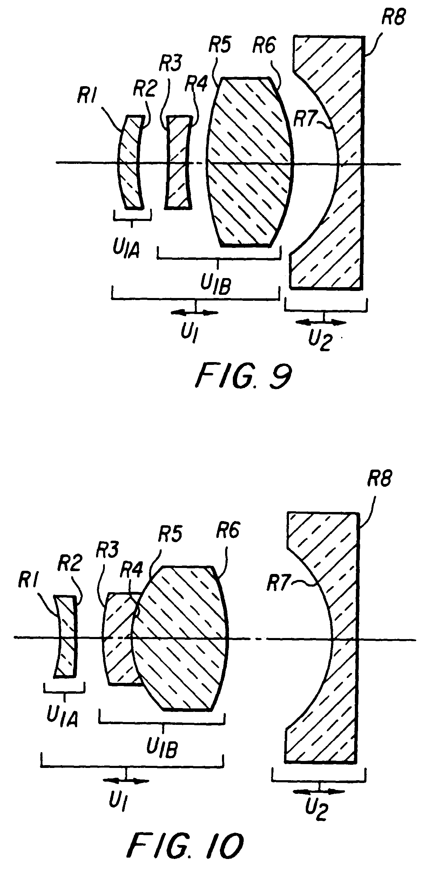

Figs. 1-10 are simplified schematic cross-sectional views of a zoom lens constructed according to ten embodiments of the present invention.

BEST MODE OF CARRYING OUT THE INVENTION

The embodiments of the invention are shown in Figs. 1-10 and are illustrated by a series of examples set forth in Tables 1-10. In the drawings the surfaces R are numbered by subscripts from the front or object side of the lens to the rear or image side of the lens. The thickness of the lens elements T and the spacings S including the zooming space A between elements are also numbered from front to rear. In the tables, surfaces and thicknesses are listed on the same line as the surface preceding the thickness or spacing as the case may be. All indexes $N_e$ are for the green mercury e line of the spectrum at a wavelength $\lambda_e$ of 5461Å. V is the Abbe number of the lens elements.

All of the examples contain two optical units, specified as $U_1$ and $U_2$ in the drawings. Subunits $U_{1A}$ and $U_{1B}$ make up the first optical unit or group $U_1$ and $U_2$ is the second optical unit or group. In the embodiments shown in Figs. 1 through 10, optical subunits $U_{1A}$ and $U_{1B}$ move together during zooming, and the space between these two optical subunits does not vary for zooming. These embodiments thus have the substantial advantage of requiring a much simpler zooming mechanism than would be required otherwise. However, in the broader aspects of the invention, it is contemplated that the air space between the optical subunits $U_{1A}$ and $U_{1B}$ may be made to vary during zooming.

Optical subunit $U_{1A}$ in each example is a single weak lens component which may or may not have aspheric surfaces. By "weak," it is meant that the power of a first subunit $U_{1A}$ is smaller than the power of the first optical unit $U_1$ so that the absolute value of the ratio of power, $K_{1A}$, of the optical subunit $U_{1A}$ to the power, $K_1$, of the optical unit $U_1$ is about 0.5 or less or

$$\left| \frac{K_{1A}}{K_1} \right| < 0.5$$

In Examples 3 through 8 and 10, this subunit $U_{1A}$ is negative in power. In Examples 1, 2 and 9, it is slightly positive in power. In all examples, its power is less than 0.9 times that of the power of the entire lens $K_w$ at its wide angle position. However, its power is preferably between 0.2 and 0.9, and it is more preferable that the power be between 0.4 and 0.9 times the power $K_w$ of the entire lens as is the case with the Examples 1 through 6, 9 and 10.

The second lens subunit, $U_{1B}$, is positive in all examples. It contains one or more lens elements. In Examples 1, 2 and 8, it contains two very slightly air-spaced elements. In example 10, it is a cemented doublet. In example 9, the air space between two lens elements is relatively large. In examples 3 through 7, it is a single lens element.

The aperture stop is positioned between the first and second subunits $U_{1A}$ and $U_{1B}$ respectively. It facilitates correction of the lens especially at its telephoto position, as well as minimizing the aperture size of the second optical unit. This permits a numerical aperture f/11 at the long focal length position, while maintaining an aperture of at least f/8 at the short focal length position in a zoom lens having a range of 2.

The second optical unit $U_2$ is substantially negative in power. Its movement provides most of the change in focal length of the lens during zooming and consists of a single negative lens component. In four of the embodiments, i.e. examples 6, 8, 9 and 10, this element is biconcave and has a stronger surface facing the front and the weaker surface oriented towards the rear. These examples demonstrate that the lens system can be designed without the restriction that the rear negative unit be a meniscus lens element.

Note that all of the examples are corrected across a zoom range of 2 with an effective aperture that varies from approximately f/8 to f/11. This range of apertures for a 3 or 4 element zoom lens suitable as an objective or taking lens for a 35mm camera is quite remarkable.

EXAMPLE 1

## TABLE 1

| SURFACE | CLEAR APER. | RADIUS | THICKNESS | MATERIAL |
|---|---|---|---|---|
| R1 | 10.12 | 8.80 | 2.00 | 589613 |
| R2 | 8.32 | 11.51 | 3.34 | |
| | 3.75 | DIAPHRAGM | 1.00 | |
| R3 | 4.22 | -66.23 | 6.25 | 772497 |
| R4 | 9.01 | -9.40 | 0.79 | |
| R5 | 9.11 | -6.60 | 4.03 | 834372 |
| R6 | 12.87 | -8.67 | A | |
| R7 | 17.05 | -12.22 | 1.50 | 702412 |
| R8 | 22.01 | -115.78 | | |

| SURFACES | EF | BF | FF |
|---|---|---|---|
| R1-R6 | 17.46 | 13.41 | 4.97 |
| R7-R8 | -19.48 | -20.47 | -19.38 |

$$\left| \frac{K_{1A}}{K_w} \right| = .53 \quad \text{and} \quad \left| \frac{K_{1A}}{K_1} \right| = .35$$

| EF | A | REL. APER. |
|---|---|---|
| 49.51 | 0.91 | 11.24 |
| 34.65 | 3.85 | 9.40 |
| 26.08 | 7.08 | 8.20 |

EXAMPLE 2

## TABLE 2

| SURFACE | CLEAR APER. | RADIUS | THICKNESS | MATERIAL |
|---|---|---|---|---|
| R1 | 10.00 | 11.08 | 2.00 | 589613 |
| R2 | 8.13 | 15.79 | 3.24 | |
| | 3.88 | DIAPHRAGM | 1.00 | |
| R3 | 4.00 | -19.21 | 4.03 | 762266 |
| R4 | 8.17 | -59.17 | 0.30 | |
| R5 | 9.89 | 39.79 | 5.08 | 772497 |
| R6 | 12.28 | -12.46 | A | |
| R7 | 14.61 | -9.64 | 1.50 | 772497 |
| R8 | 19.18 | -50.43 | | |

| SURFACES | EF | BF | FF |
|---|---|---|---|
| R1-R6 | 15.05 | 12.85 | 3.84 |
| R7-R8 | -15.61 | -16.67 | -15.41 |

$$\left| \frac{K_{1A}}{K_w} \right| = .48 \quad \text{and} \quad \left| \frac{K_{1A}}{K_1} \right| = .28$$

| EF | A | REL. APER. |
|---|---|---|
| 49.79 | 2.17 | 11.24 |
| 34.65 | 4.23 | 9.40 |
| 26.03 | 6.48 | 8.20 |

EXAMPLE 3

## TABLE 3

| SURFACE | CLEAR APER. | RADIUS | THICKNESS | MATERIAL |
|---|---|---|---|---|
| R1 | 4.45 | ASPHERE | 1.40 | 535405 |
| R2 | 4.41 | 10.75 | 0.30 | |
| | 4.42 | DIAPHRAGM | 2.79 | |
| R3 | 8.22 | 42.95 | 3.60 | 492574 |
| R4 | 9.50 | ASPHERE | A | |
| R5 | 15.42 | ASPHERE | 2.00 | 535405 |
| R6 | 21.55 | -690.15 | | |

ASPHERIC EQUATION:

$$X = \frac{CY^2}{1 + \sqrt{1-(k+1)C^2Y^2}} + DY^4 + EY^6 + FY^8 + GY^{10} + HY^{12} + IY^{14}$$

SURFACE R1   C = 0.033   D = -0.751E-03   H = 0.322E-05
             k = 0.000   E = 0.606E-04    I = -0.260E-06
                         F = 0.121E-04
                         G = -0.135E-04

SURFACE R4   C = -0.143  D = -0.311E-03   H = -0.373E-08
             k = -0.999  E = -0.172E-05   I = 0.582E-10
                         F = -0.813E-06
                         G = 0.848E-07

SURFACE R5   C = -0.098  D = -0.456E-04   H = 0.113E-09
             k = -0.810  E = -0.474E-05   I = -0.655E-12
                         F = 0.242E-06
                         G = -0.765E-08

$$\left| \frac{K_{1A}}{K_W} \right| = .819 \quad \text{and} \quad \left| \frac{K_{1A}}{K_1} \right| = .52$$

| EF | A | REL. APER. |
|---|---|---|
| 50.07 | 5.75 | 11.24 |
| 34.61 | 8.57 | 9.40 |
| 25.92 | 11.63 | 8.20 |

EXAMPLE 4

## TABLE 4

| SURFACE | CLEAR APER. | RADIUS | THICKNESS | MATERIAL |
|---------|-------------|--------|-----------|----------|
| R1 | 6.12 | -31.13 | 1.40 | 590309 |
| R2 | 4.90 | ASPHERE | 1.30 | |
| | 4.72 | DIAPHRAGM | 1.98 | |
| R3 | 6.44 | 46.89 | 3.60 | 492574 |
| R4 | 8.45 | ASPHERE | A | |
| R5 | 17.17 | ASPHERE | 2.00 | 535405 |
| R6 | 23.99 | -700.15 | | |

ASPHERIC EQUATION:

$$X = \frac{CY^2}{1 + \sqrt{1-(k+1)C^2Y^2}} + DY^4 + EY^6 + FY^8 + GY^{10} + HY^{12} + IY^{14}$$

SURFACE R2
$C = 0.015$  $D = 0.477E-03$  $H = -0.206E-07$
$k = 0.0$   $E = 0.176E-05$  $I = 0.0$
$F = -0.426E-05$
$G = 0.784E-06$

SURFACE R4
$C = -0.125$  $D = -0.161E-03$  $H = 0.259E-07$
$k = -1.126$  $E = -0.362E-04$  $I = -0.465E-09$
$F = 0.611E-05$
$G = -0.564E-06$

SURFACE R5
$C = -0.086$  $D = -0.484E-04$  $H = 0.187E-10$
$k = -0.653$  $E = -0.157E-05$  $I = -0.957E-13$
$F = 0.542E-07$
$G = -0.143E-08$

$$\left| \frac{K_{1A}}{K_W} \right| = .74 \quad \text{and} \quad \left| \frac{K_{1A}}{K_1} \right| = .47$$

| EF | A | REL. APER. |
|-----|-----|-----------|
| 50.01 | 7.35 | 11.24 |
| 34.65 | 10.97 | 9.40 |
| 26.06 | 14.85 | 8.20 |

EXAMPLE 5

**TABLE 5**

| SURFACE | CLEAR APER. | RADIUS | THICKNESS | MATERIAL |
|---|---|---|---|---|
| R1 | 5.90 | 25.05 | 1.00 | 590309 |
| R2 | 4.90 | ASPHERE | 1.30 | |
| | 4.40 | DIAPHRAGM | 3.76 | |
| R3 | 8.18 | -58.15 | 3.00 | 713538 |
| R4 | 9.78 | -9.40 | A | |
| R5 | 15.42 | ASPHERE | 2.00 | 535405 |
| R6 | 21.20 | -433.42 | | |

ASPHERIC EQUATION:

$$X = \frac{CY^2}{1 + \sqrt{1-(k+1)c^2Y^2}} + DY^4 + EY^6 + FY^8 + GY^{10} + HY^{12} + IY^{14}$$

SURFACE R2
$C = 0.052$    $D = 0.360E\text{-}03$    $H = -0.450E\text{-}06$
$k = 0.0$    $E = 0.349E\text{-}04$    $I = 0.0$
$F = -0.267E\text{-}04$
$G = 0.604E\text{-}05$

SURFACE R5
$C = -0.096$    $D = -0.522E\text{-}04$    $H = 0.415E\text{-}10$
$k = -0.607$    $E = -0.190E\text{-}05$    $I = -0.238E\text{-}12$
$F = 0.920E\text{-}07$
$G = -0.281E\text{-}08$

| SURFACES | EF | BF | FF |
|---|---|---|---|
| R1-R4 | 16.43 | 17.31 | 8.29 |
| R5-R6 | -19.85 | -21.19 | -19.82 |

$$\left| \frac{K_{1A}}{K_w} \right| = .178 \quad \text{and} \quad \left| \frac{K_{1A}}{K_1} \right| = .11$$

| EF | A | REL. APER. |
|---|---|---|
| 49.59 | 4.07 | 11.24 |
| 34.65 | 6.90 | 9.40 |
| 26.06 | 10.00 | 8.20 |

EXAMPLE 6

## TABLE 6

| SURFACE | CLEAR APER. | RADIUS | THICKNESS | MATERIAL |
|---------|-------------|--------|-----------|----------|
| R1 | 6.12 | -173.69 | 1.40 | 590309 |
| R2 | 4.90 | ASPHERE | 1.30 | |
| | 4.62 | DIAPHRAGM | 2.12 | |
| R3 | 6.70 | 60.11 | 3.60 | 492574 |
| R4 | 8.59 | ASPHERE | A | |
| R5 | 15.56 | ASPHERE | 2.00 | 535405 |
| R6 | 21.57 | 1,334.15 | | |

ASPHERIC EQUATION:

$$X = \frac{CY^2}{1 + \sqrt{1-(k+1)C^2Y^2}} + DY^4 + EY^6 + FY^8 + GY^{10} + HY^{12} + IY^{14}$$

SURFACE R2  $C = 0.043$  $D = 0.654E\text{-}03$  $H = 0.574E\text{-}06$
$k = 0.0$  $E = -0.878E\text{-}04$  $I = 0.0$
$F = 0.447E\text{-}04$
$G = -0.843E\text{-}05$

SURFACE R4  $C = -0.140$  $D = -0.104E\text{-}03$  $H = 0.468E\text{-}07$
$k = -0.989$  $E = -0.691E\text{-}04$  $I = -0.806E\text{-}09$
$F = 0.116E\text{-}04$
$G = -0.105E\text{-}05$

SURFACE R5  $C = -0.094$  $D = -0.297E\text{-}04$  $H = 0.398E\text{-}10$
$k = -0.705$  $E = -0.343E\text{-}05$  $I = -0.222E\text{-}12$
$F = 0.125E\text{-}06$
$G = -0.307E\text{-}08$

| SURFACES | EF | BF | FF |
|----------|-----|-----|-----|
| R1-R4 | 16.83 | 19.39 | 8.75 |
| R5-R6 | -19.48 | -20.77 | -19.49 |

$$\left| \frac{K_{1A}}{K_W} \right| = .76 \quad \text{and} \quad \left| \frac{K_{1A}}{K_1} \right| = .49$$

| EF | A | REL. APER. |
|-----|-----|------------|
| 49.61 | 6.51 | 11.24 |
| 34.63 | 9.37 | 9.40 |
| 26.05 | 12.49 | 8.20 |

EXAMPLE 7

**TABLE 7**

| SURFACE | CLEAR APER. | RADIUS | THICKNESS | MATERIAL |
|---|---|---|---|---|
| R1 | 5.85 | 23.60 | 1.00 | 689312 |
| R2 | 4.90 | ASPHERE | 1.30 | |
| | 4.41 | DIAPHRAGM | 3.68 | |
| R3 | 8.34 | -57.10 | 3.00 | 713538 |
| R4 | 9.76 | -9.32 | A | |
| R5 | 15.60 | ASPHERE | 2.00 | 575415 |
| R6 | 21.20 | -203.40 | | |

ASPHERIC EQUATION:

$$X = \frac{CY^2}{1 + \sqrt{1-(k+1)C^2Y^2}} + DY^4 + EY^6 + FY^8 + GY^{10} + HY^{12} + IY^{14}$$

SURFACE R2   C = 0.054   D = 0.351E-03   H = -0.417E-06
             k = 0.0     E = 0.193E-04   I = 0.000E+00
                         F = -0.215E-04
                         G = 0.532E-05

SURFACE R5   C = -0.094   D = -0.501E-04   H = 0.315E-10
             k = -0.577   E = -0.130E-05   I = -0.181E-12
                          F = 0.658E-07
                          G = -0.209E-08

| SURFACES | EF | BF | FF |
|---|---|---|---|
| R1-R4 | 16.43 | 17.31 | 8.29 |
| R5-R6 | -19.85 | -21.19 | -19.82 |

$$\left| \frac{K_{1A}}{K_W} \right| = .20$$

| EF | A | REL. APER. |
|---|---|---|
| 49.79 | 4.38 | 11.24 |
| 34.65 | 7.21 | 9.40 |
| 26.06 | 10.28 | 8.20 |

10

EXAMPLE 8

**TABLE 8**

| SURFACE | CLEAR APER. | RADIUS | THICKNESS | MATERIAL |
|---|---|---|---|---|
| R1 | 5.54 | -13.45 | 1.23 | 722293 |
| R2 | 5.25 | -19.27 | 1.00 | |
| | 4.68 | DIAPHRAGM | 1.01 | |
| R3 | 4.89 | 17.25 | 4.29 | 762270 |
| R4 | 7.50 | 13.18 | 0.37 | |
| R5 | 8.49 | 17.12 | 5.91 | 623581 |
| R6 | 11.50 | -12.86 | A | |
| R7 | 16.00 | -10.27 | 1.50 | 517642 |
| R8 | 22.16 | 356.34 | | |

| SURFACES | EF | BF | FF |
|---|---|---|---|
| R1-R6 | 17.24 | 16.49 | 9.05 |
| R7-R8 | -19.23 | -20.18 | -19.25 |

$$\left| \frac{K_{1A}}{K_w} \right| = .39 \quad \text{and} \quad \left| \frac{K_{1A}}{K_1} \right| = .26$$

| EF | A | REL. APER. |
|---|---|---|
| 49.73 | 3.90 | 11.24 |
| 34.64 | 6.80 | 9.40 |
| 26.01 | 9.98 | 8.20 |

EP 0 571 608 B1

EXAMPLE 9

## TABLE 9

| SURFACE | CLEAR APER. | RADIUS | THICKNESS | MATERIAL |
|---------|-------------|--------|-----------|----------|
| R1 | 6.00 | 10.73 | 1.50 | 589613 |
| R2 | 5.03 | 16.62 | 1.36 | |
| | 4.04 | DIAPHRAGM | 0.93 | |
| R3 | 3.96 | -68.99 | 1.73 | 548458 |
| R4 | 5.93 | 19.86 | 1.14 | |
| R5 | 9.47 | 31.71 | 7.00 | 772497 |
| R6 | 13.17 | -12.07 | A | |
| R7 | 14.99 | -9.91 | 2.48 | 575415 |
| R8 | 21.01 | 1,000.00 | | |

| SURFACES | EF | BF | FF |
|----------|------|-------|--------|
| R1-R5 | 15.10 | 12.82 | 6.07 |
| R6-R7 | -16.95 | -18.51 | -29.29 |

$$\left| \frac{K_{1A}}{K_w} \right| = .56 \quad \text{and} \quad \left| \frac{K_{1A}}{K_1} \right| = .32$$

| EF | A | REL. APER. |
|-------|------|------------|
| 49.18 | 1.06 | 11.24 |
| 34.64 | 3.25 | 9.40 |
| 26.06 | 5.68 | 8.20 |

EP 0 571 608 B1

EXAMPLE 10

## TABLE 10

| SURFACE | CLEAR APER. | RADIUS | THICKNESS | MATERIAL |
|---------|-------------|--------|-----------|----------|
| R1 | 5.50 | -13.61 | 1.09 | 613586 |
| R2 | 5.20 | -27.11 | 1.00 | |
| | 4.69 | DIAPHRAGM | 1.01 | |
| R3 | 5.88 | 17.08 | 2.14 | 805254 |
| R4 | 6.75 | 7.54 | 8.00 | 652449 |
| R5 | 11.13 | -13.14 | A | |
| R6 | 16.16 | -10.25 | 1.50 | 517642 |
| R7 | 22.63 | 298.46 | | |

| SURFACES | EF | BF | FF |
|----------|-------|--------|--------|
| R1-R5 | 17.33 | 17.38 | -9.12 |
| R6-R7 | -19.08 | -20.03 | -19.11 |

$$\left| \frac{K_{1A}}{K_w} \right| = .57 \quad \text{and} \quad \left| \frac{K_{1A}}{K_1} \right| = .38$$

| EF | A | REL. APER. |
|-------|-------|------------|
| 49.85 | 4.90 | 11.24 |
| 34.64 | 7.82 | 9.55 |
| 25.99 | 10.99 | 8.20 |

The invention has been described in detail with particular reference to a preferred embodiment thereof, but it will be understood that variations and modifications can be effected within the scope of the invention as described hereinabove and as defined in the appended claims. For example, the second positive subunit $U_{1B}$ could be made into a doublet. Although, such minor changes are within the scope of the invention, they would detract from its simplicity.

## Claims

1. A zoom lens comprising two optical units of lens components including, from the object side, a first positive optical unit ($U_1$) and a second negative optical unit ($U_2$) and which zoom lens achieves zooming between a wide angle position and a narrow angle position by changing the distance between the first and the second optical units ($U_1$ and $U_2$), said first optical unit ($U_1$) including two optical subunits, a first, weak single component subunit ($U_{1A}$) positioned on the object side of said first optical unit ($U_1$) and a second positive subunit ($U_{1B}$), said second optical unit ($U_2$) consisting of a single negative lens component, and said zoom lens satisfying the following condition

$$0.17 < \left| \frac{K_{1A}}{K_w} \right| < 0.9$$

where $K_{1A}$ is the power of the first subunit (U1A) and $K_w$ is the power of the entire zoom lens at its wide angle

13

position,
characterized in that the first and second subunits ($U_{1A}$ and $U_{1B}$) are separated by an aperture stop.

2. A zoom lens according to claim 1 wherein the first subunit ($U_{1A}$) consists of a single negative component.

3. A zoom lens according to claim 2 wherein the first unit ($U_1$) has at least one aspheric surface.

4. A zoom lens according to claim 1 wherein the ratio of l$K_{1A}$ / $K_w$l is greater than 0.4.

5. A zoom lens according to claim 4 wherein the first subunit $U_{1A}$ consists of a single positive component.

6. A zoom lens according to claim 1 wherein the second subunit $U_{1B}$ consists of a doublet.

7. A zoom lens according to claim 1 wherein said single negative lens element is a biconcave lens element.

8. A zoom lens comprising two optical units of lens components including, from tile object side, a first positive optical unit ($U_1$) and a second negative optical unit ($U_2$) and which zoom lens achieves zooming between a wide angle position and a narrow angle position by changing the distance (A) between the first and the second optical units ($U_1$ and $U_2$), said first optical unit ($U_1$) including two optical subunits ($U_{1A}$ and $U_{1B}$), a first weak single component, negative subunit ($U_{1A}$) positioned on the object side of said first optical unit ($U_1$), and a second positive subunit ($U_{1B}$) consisting of a positive doublet; and said second optical unit ($U_2$) consisting of a single negative lens component; characterized in that the first and second subunits ($U_{1A}$ and $U_{1B}$) are separated by an aperture stop, and said zoom lens satisfies the following condition

$$\left| \frac{K_{1A}}{K_1} \right| < 0.5$$

where $K_{1A}$ is the optical power of the first subunit ($U_{1A}$) and $K_1$ is the power of the first unit ($U_1$).

**Patentansprüche**

1. Zoom-Objektiv mit zwei optischen Einheiten von Einzellinsen, die gegenstandsseitig eine erste positive optische Einheit ($U_1$) und eine zweite negative optische Einheit ($U_2$) umfassen, wobei die Brennweite des Zoom-Objektivs zwischen einer weiten Winkelstellung und einer engen Winkelstellung verstellbar ist, indem der Abstand zwischen der ersten und zweiten optischen Einheit ($U_1$ und $U_2$) veränderbar ist, wobei die erste optische Einheit ($U_1$) aus zwei optischen Untereinheiten besteht, einer aus einer ersten schwachen Einzellinse bestehenden Untereinheit ($U_{1A}$), die auf der Gegenstandsseite der ersten optischen Einheit ($U_1$) angeordnet ist, und einer zweiten positiven Untereinheit ($U_{1B}$), und wobei die zweite optische Einheit ($U_2$) aus einer negativen Einzellinse besteht und das Zoom-Objektiv der folgenden Funktion genügt

$$0,17 < \left| \frac{K_{1A}}{K_w} \right| < 0,9$$

wobei $K_{1A}$ die Brechkraft der ersten Untereinheit ($U_{1A}$) und $K_w$ die Brechkraft des ganzen Zoom-Objektivs in seiner weiten Winkelstellung ist,
**dadurch gekennzeichnet,** daß die erste und zweite Untereinheit ($U_{1A}$ und $U_{1B}$) durch eine Aperturblende voneinander getrennt sind.

2. Zoom-Objektiv nach Anspruch 1, dadurch gekennzeichnet, daß die erste Einheit ($U_1$) mindestens eine asphärische Fläche hat.

3. Zoom-Objektiv nach Anspruch 1, dadurch gekennzeichnet, daß das Verhältnis von $K_{1A}/K_w$ größer als 0,4 ist.

4. Zoom-Objektiv nach Anspruch 3, dadurch gekennzeichnet, daß die erste Untereinheit $U_{1A}$ aus einer positiven Einzellinse besteht.

5. Zoom-Objektiv nach Anspruch 1, dadurch gekennzeichnet, daß die zweite Untereinheit $U_{1B}$ aus einer Doppellinse besteht.

6. Zoom-Objektiv nach Anspruch 1, dadurch gekennzeichnet, daß die negative Einzellinse ein bikonkaves Linsenelement ist.

7. Zoom-Objektiv mit zwei optischen Einheiten von Einzellinsen, die gegenstandsseitig eine erste positive optische Einheit ($U_1$) und eine zweite negative optische Einheit ($U_2$) umfassen, wobei die Brennweite des Zoom-Objektivs zwischen einer weiten Winkelstellung und einer engen Winkelstellung verstellbar ist, indem der Abstand (A) zwischen der ersten und zweiten optischen Einheit ($U_1$ und $U_2$) veränderbar ist, wobei die erste optische Einheit ($U_1$) aus zwei optischen Untereinheiten ($U_{1A}$ und $U_{1B}$) besteht, einer aus einer ersten schwachen Einzellinse bestehenden negativen Untereinheit ($U_{1A}$), die auf der Gegenstandsseite der ersten optischen Einheit ($U_1$) angeordnet ist, und einer zweiten positiven Untereinheit ($U_{1B}$), die aus einer positiven Doppellinse besteht, und wobei die zweite optische Einheit ($U_2$) aus einer negativen Einzellinse besteht, **dadurch gekennzeichnet,** daß die erste und die zweite Untereinheit ($U_{1A}$ und $U_{1B}$) durch eine Aperturblende voneinander getrennt sind und das Zoom-Objektiv der folgenden Funktion genügt

$$\left|\frac{K_{1A}}{K_1}\right| < 0{,}5$$

wobei $K_{1A}$ die Brechkraft der ersten Untereinheit ($U_{1A}$) und $K_1$ die Brechkraft der ersten Einheit ($U_1$) ist.

## Revendications

1. Objectif à focale variable constitué de deux ensembles optiques de lentilles comprenant, depuis le côté objet, un premier ensemble optique convergent ($U_1$) et un second ensemble optique divergent ($U_2$), lequel objectif à focale variable change de focale entre une position de grand angle et une position d'angle de champ étroit en faisant varier la distance entre le premier et le second ensembles optiques ($U_1$ et $U_2$), ledit premier ensemble optique ($U_1$) comprenant deux sous-ensembles optiques, un premier sous-ensemble ($U_{1A}$) à une seule lentille de faible puissance, positionné du côté objet dudit premier ensemble optique ($U_1$), et un second sous-ensemble convergent ($U_{1B}$), ledit second ensemble optique ($U_2$) étant constitué par une seule lentille divergente, et ledit objectif à focale variable satisfaisant la condition suivante

$$0{,}17 < \left|\frac{K_{1A}}{K_W}\right| < 0{,}9$$

où $K_{1A}$ est la puissance du premier sous-ensemble ($U_{1A}$) et $K_w$ est la puissance de l'objectif à focale variable dans son ensemble dans sa position de grand angle,
caractérisé en ce que les premier et second sous-ensembles ($U_{1A}$ et $U_{1B}$) sont séparés par un diaphragme d'ouverture.

2. Objectif à focale variable selon la revendication 1, dans lequel le premier ensemble ($U_1$) comporte au moins une surface asphérique.

3. Objectif à focale variable selon la revendication 1, dans lequel le rapport $|K_{1A} / K_W|$ est supérieur à 0,4.

4. Objectif à focale variable selon la revendication 3, dans lequel le premier sous-ensemble $U_{1A}$ est constitué par une seule lentille convergente.

5. Objectif à focale variable selon la revendication 1, dans lequel le second sous-ensemble $U_{1B}$ est constitué par un doublet.

6. Objectif à focale variable selon la revendication 1, dans lequel ladite unique lentille divergente est une lentille biconcave.

7. Objectif à focale variable constitué de deux ensembles optiques de lentilles comprenant, depuis le côté objet, un premier ensemble optique convergent ($U_1$) et un second ensemble optique divergent ($U_2$), lequel objectif variable change de focale entre une position de grand angle et une position d'angle de champ étroit en faisant varier la distance (A) entre le premier et le second ensemble optique ($U_1$ et $U_2$), ledit premier ensemble optique ($U_1$) comprenant deux sous-ensembles optiques ($U_{1A}$ et $U_{1B}$), un premier sous-ensemble divergent ($U_{1A}$), à une seule lentille de faible puissance, positionné du côté objet dudit premier ensemble optique ($U_1$), et un second sous-ensemble convergent ($U_{1B}$), constitué par un doublet convergent, ledit second ensemble optique ($U_2$) étant constitué par une seule lentille divergente, caractérisé en ce que les premier et second sous-ensembles ($U_{1A}$ et $U_{1B}$) sont séparés par un diaphragme d'ouverture, et en ce que ledit objectif à focale variable satisfait la condition suivante

$$\left| \frac{K_{1A}}{K_1} \right| < 0,5$$

où $K_{1A}$ est la puissance du premier sous-ensemble ($U_{1A}$) et $K_1$ est la puissance du premier ensemble ($U_1$).

FIG. 1

FIG. 2

FIG.3

FIG. 4

FIG.5

FIG.6

FIG. 7

FIG. 8

FIG. 9

FIG. 10